# EUROPEAN PATENT SPECIFICATION

(11) **EP 3 244 133 B1**
(45) Date of publication and mention of the grant of the patent: **11.09.2019**
(21) Application number: 17170562.7
(22) Date of filing: 11.05.2017
(51) Int. Cl.: F16L 9/00, F16L 45/00, F24F 13/02, F16L 9/22

(54) **AIR DUCT AND INSPECTION METHOD THEREOF**
LUFTKANAL UND INSPEKTIONSVERFAHREN DAFÜR
CONDUIT D'AIR ET PROCÉDÉ D'INSPECTION ASSOCIÉ

(30) Priority: 12.05.2016 IT UB20163391
(43) Date of publication of application: 15.11.2017
(73) Proprietor: Klimagiel S.r.l., 37135 Verona (IT)
(72) Inventor: GRANZOTTO, Lanfranco, 37126 Verona (IT)
(74) Representative: Anselmi, Davide

(56) References cited:
- EP-A1- 2 781 814
- EP-A2- 2 241 839
- WO-A1-88/03244
- FR-A1- 2 922 290
- GB-A- 2 516 246
- US-A- 3 823 652

## Description

The present invention relates to a channel for transporting and distributing air and a method for inspecting such channel. In particular, the present invention relates to a channel defined by a plurality of modules that are consecutively connected and internally inspectable.

In fact, the invention falls within the sector of the transport and distribution of air preferably in environments internal to a building so as to produce ventilation and circulation of air in such environments. Normally, the channel extends from an air inlet area in fluid communication with the external environment to a plurality of areas internal to the building.

In detail, the channel is preferably of the type that is applied to a supporting surface (e.g. a wall, ceiling, ...). Even more preferably, the present invention relates to channels applied to the ceiling, but without this excluding the fact that it can be applied to any other supporting surface.

Furthermore, the channel may be of various shapes and comprises a supporting base connected to the supporting surface and the channelling module connected to the base. In particular, in the event of a semi-circular channel, it comprises a plurality of semi-circular shaped modules consecutively connected to the supporting base (also defined as the "sky" with reference to ceiling applications). The base is usually flat and is connected to the supporting surface, while the modules are connected to the base itself.

Preferably, each module has its own longitudinal ends connected to the longitudinal edges of the base so as to define the area for the flow of air between the base itself and the module. To perform such connection, there are different systems among which, one of the most common is that of bending a portion of the longitudinal ends and the longitudinal edges towards the inside and connecting such bends together through a laterally open and internally hollow rod. In this way, the rod is inserted outside the bends so that the latter are located into the rod itself and are held together by it.

Furthermore, each module has a first section of it for the flow of air and a second section of it for the flow of air, opposite one another and alternatively shaped as a "male" joint and a "female" joint. In other words, for every module the first section is shaped as a male joint and the second as a female joint so that by creating a row of modules they are fitted inside one another: the male joint inside the female joint of the consecutive module.

However, this first technology implies some drawbacks.

In particular, the main drawbacks are connected with the fact that it is periodically necessary to disassemble the channel or part of it for inspecting the inside so as to perform maintenance and cleaning operations (especially in the case of food companies that require more frequent checks). The term "disassemble" means disconnecting the module from the base so as to be able to access the area in which the air is transported.

According to the prior art described above, to access an area to be inspected it is necessary to disassemble the whole channel starting from the air inlet area or from a closing cap. In detail, to disassemble the channel it is necessary to:
- take out the rod;
- disconnect one module after the other removing one joint after the other by performing a movement that is substantially parallel to the main extension direction of the channel.

These operations are repeated until reaching the area of the channel to be inspected. Of course, the problem is worse if such area to be inspected is located in a central point of the channel, far from a starting or end point of the latter.

In addition to this, in the case of ceiling-mounted applications, it is also to be noted that the disassembly of the modules is hindered due to the fact that each of them must be kept suspended during the removal of the rod (otherwise it would fall to the ground) and must be brought to the ground subsequently.

Consequently, dangerous situations can often arise connected with the accidental falling of modules or the fact that the latter are difficult to reach.

US3823652 discloses an air channel according to the preamble of claim 1.

FR2922290A1 discloses a modular duct which is fixed to a supporting surface.

In this situation, the object of the present invention is to create a channel for transporting and distributing air and a method for inspecting such channel, which overcomes the above-mentioned drawbacks .

It is in particular an object of the present invention to create a channel for transporting and distributing air that allows the inspection operations on the channel to be simplified regardless of the position of the area to be inspected.

It is another object of the present invention to create a channel for transporting and distributing air that allows the inspection operations on the channel to be reduced.

It is finally an object of the present invention to create a channel for transporting and distributing air that allows the safety of the disassembly operations of the modules of a channel to be improved.

The indicated objects are substantially reached by a channel for transporting and distributing air and a method for inspecting such channel according to the descriptions in the appended claims.

Further characteristics and advantages of the present invention will more greatly emerge from the detailed description of some preferred but not exclusive embodiments of a channel for transporting and distributing air and a method for inspecting such channel, illustrated in the appended drawings, in which:

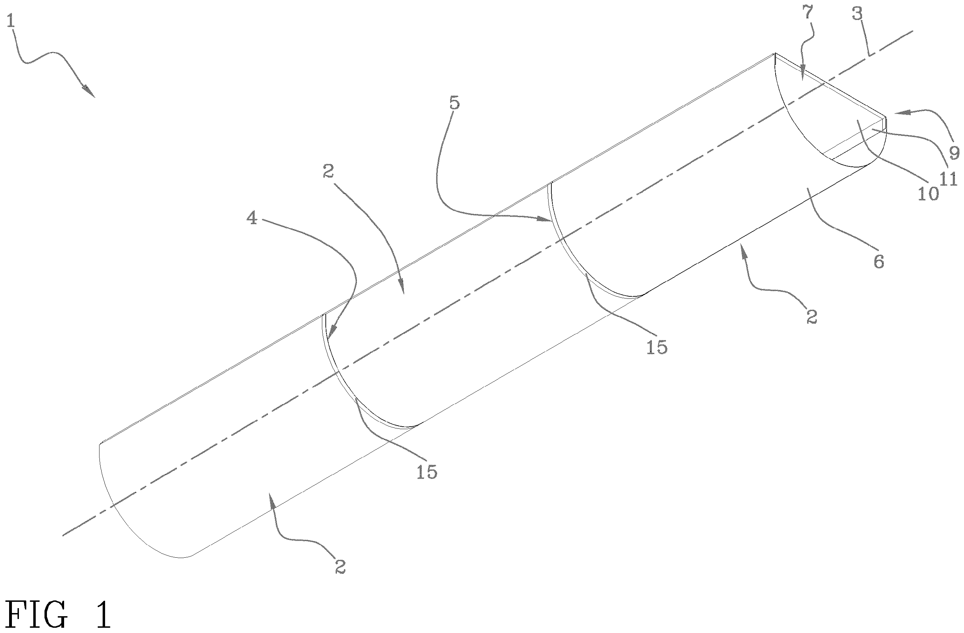

- figure 1 shows an axonometric view from below of a channel for transporting and distributing air, according to the present invention, in the assembled position;
- figure 2 shows an axonometric view from below of the channel of figure 1 during a first disassembly step;
- figure 3 shows an axonometric view from below of the channel of figure 1 during a second disassembly step;
- figure 4 shows a lateral view of an embodiment of the channel of figure 1 in the assembled position;
- figure 5 shows a lateral view of the embodiment of the channel of figure 4 in the disassembly step; and
- figures 6 and 7 show a lateral view of an embodiment alternative to the embodiment shown in figures 4 and 5.

With reference to the figures mentioned, reference number 1 generally denotes a channel 1 for transporting and distributing air according to the present invention.

In particular, the channel 1 according to the present invention comprises a plurality of channelling modules 2 sequentially connected along a main direction of extension 3 of the channel 1 so as to form a row. Such channel 1 extends from an inlet area (preferably arranged at a point of communication with the external environment) towards one or more areas in which the air is distributed. To perform the distribution of the air, one or more channelling modules 2 have air outlet holes.

Preferably, in the appended figures, the channel 1 has been shown applied to the ceiling of a building, but it could be applied to any other supporting surface.

Each channelling module 2 extends along the main direction of extension 3 between two ends respectively defining a first section of it for the flow of air 4 and a second section of it for the flow of air 5.

Preferably, each channelling module 2 has a semi-circular shape according to a section plane which is orthogonal to the main direction of extension 3. In other words, the channel 1 shown in the appended figures is semi-circular. However, the present invention can also be applied to different shapes such as, for example, semi-squared, ..... In any case, the bulge defined by the shape of the module defines, within the channel 1, the air passage volume.

Furthermore, each channelling module 2 laterally has a closed side 6 and an open side 7. In other words, the lateral surface that extends between the two sections is only partial and leaves an open side 7. In yet other words, the lateral surface extends between two of its longitudinal ends 8 substantially extending parallel to the main direction of extension 3. The open side 7 is defined by the empty space comprised between the two longitudinal ends 8 on the side opposite with respect to the open side 7.

In use, the open side 7 faces the supporting surface so that the air is transported between said closed side 6 and the supporting surface. Furthermore, the channel 1 comprises a supporting means 9 operatively interposed between a channelling module 2 and the supporting surface for connecting the channelling module 2 to the supporting surface.

In principle, each channelling module 2 could be connected directly to the supporting surface.

However, in the preferred embodiment, such supporting means 9 comprises a supporting base 10 connected, in use, to the supporting surface and extending along the main direction of extension 3. The closed side 6 of the channelling module 2 is (preferably entirely) connected to such supporting base 10 so that the open side 7 is "closed" by the presence of the supporting base 10 itself. In other words, each channelling module 2 is (preferably entirely) connected to the supporting base 10 in turn connected to the supporting surface.

As already explained, the module 2 is connected or disconnected entirely as a single piece with respect to the supporting base 10 (an opening window is not created).

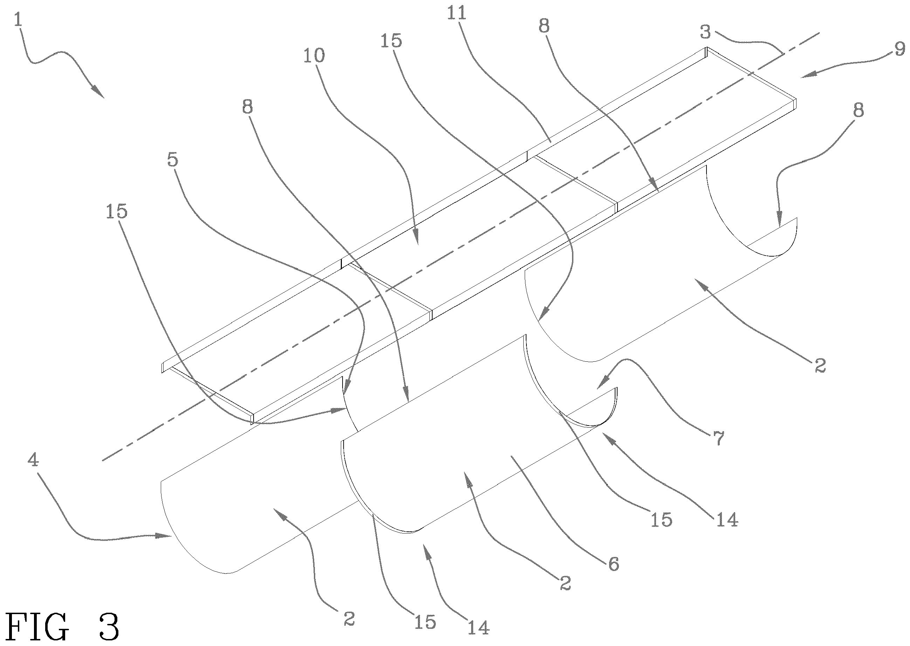

In detail, the supporting base 10 extends along the main direction of extension 3 and can be defined by a single piece onto which various modules are connected or by a plurality of pieces, each of which is associated with a respective module (as represented in figure 3). In the latter case, each supporting base 10 has a length corresponding to the length of the respective module. In the preferred embodiment the support base 10 is subdivided into a plurality of pieces. Such pieces are connected to one another through alternatively male and female shaped edges (each piece has a male section on one side and a female section on the other) so as to fit inside one another. Preferably, such pieces are connected together only through the male-joint and female-joint shaped edges and even more preferably without the interposition of intermediate supporting bands or strips between two modules.

The sequence of such edges may be independent from the sequence of the edges 15 of the corresponding closed side 6.

In addition, the supporting base 10 is substantially flat.

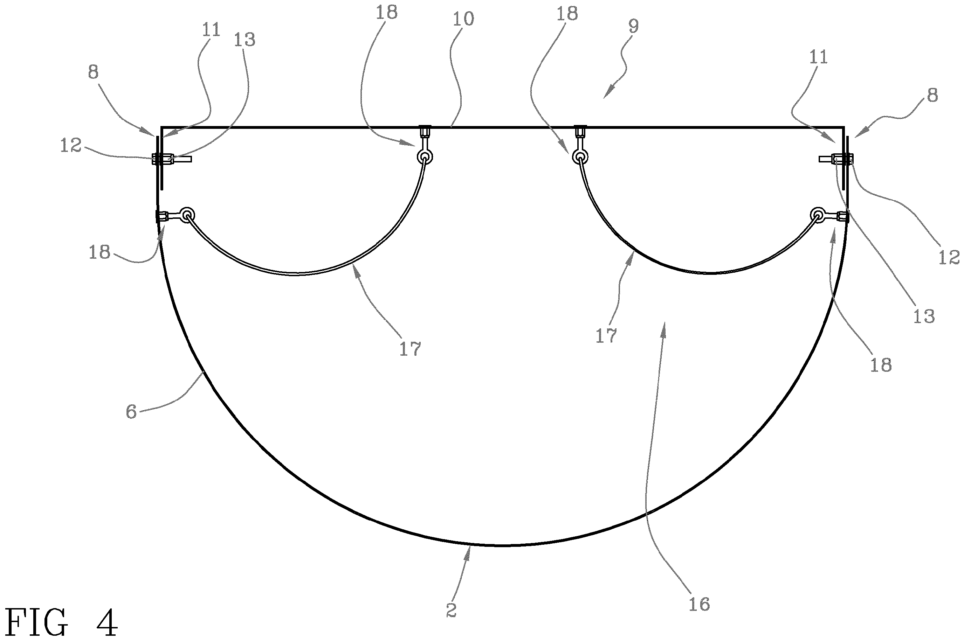

It is also to be noted that the base comprises opposite side edges 11 parallel to one another and extending along the main direction of extension 3. Such side edges 11 are preferably raised with respect to the supporting base 10. Each module is connected to the base through the longitudinal ends 8 respectively connected to said side edges 11. In figure 4 it is possible to see that the longitudinal ends 8 and the respective side edges 11 are partly superposed.

Such supporting means 9 can be configured between a fastened condition in which the channel 1 is connected to the supporting surface and a released condition. In other words, the supporting means 9 are separate for each module and can be configured between the fastened and released condition without interfering with the other two adjacent channelling modules 2. Advantageously, the supporting means 9 comprises an external portion to the channel 1 and configured to bring such supporting means 9 from the fastened condition to the released condition acting from the outside.

In detail, the supporting means 9 is configured to connect and disconnect the longitudinal ends 8 with respect to the side edges 11.

Preferably, the supporting means 9 is configured to create the connection only at the longitudinal ends 8 with respect to the side edges 11 (preventing the use of further supporting strips or bands).

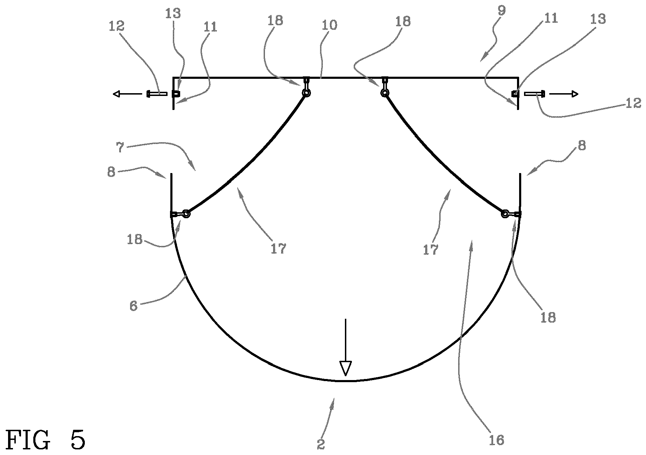

Preferably, the supporting means 9 comprises at least one area inserted through holes afforded on the longitudinal end 8 of the closed side 6 and on the corresponding side edge 11 (at the superposed part) during the fastened condition and disconnected during the released condition (figures 4 and 5). In particular, for each module there are at least two holes each arranged on the opposite side with respect to the main direction of extension 3. In any case, the number of holes is a function of the length of the module.

It is also to be noted that the supporting means member 9 preferably comprises an externally threaded screw 12 and an internally counter-threaded nut 13 so as to screw the nut 13 onto the screw 12 to lock the module onto the base during the fastened configuration. By turning the screw 12 from the outside it is possible to unscrew it and pass to the released condition.

In any case, the supporting means member 9 acts according to a transverse direction with respect to the main direction of extension.

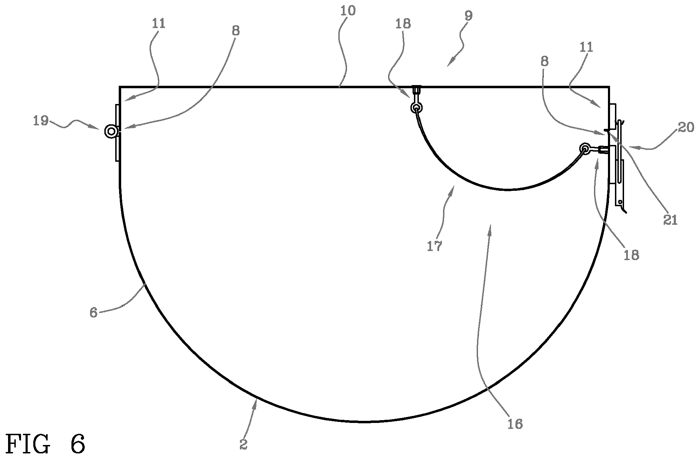

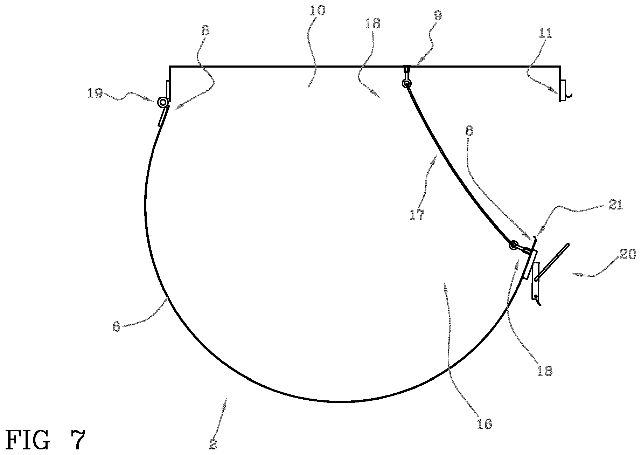

In the alternative embodiment illustrated in figures 6 and 7, the supporting means 9 comprises at least one rotatable member 19, connected between a longitudinal end 8 of the closed side 6 and the supporting surface. Preferably, such rotatable member 19 is connected between the longitudinal end 8 of the closed side 6 and the related side edge 11 of the supporting base 10. Even more preferably, the rotatable member 19 is a hinge.

Furthermore, still in the alternative embodiment illustrated in figures 6 and 7, the supporting means 9 comprises a respective closing member 20 arranged on the longitudinal end 8 of the closed side 6 opposite the first end and the supporting surface. Preferably, such closing member 20 is connected between the longitudinal end 8 of the closed side 6 and the related side edge 11 of the supporting base 10.

In figures 6 and 7 it is possible to see that such closing member 20 is of the lever type comprising two portions (one arranged on the closed side and one on the supporting base) that are connected through the snap movement of a lever.

In this way, during the released condition, the closed side 6 rotates around the rotatable member 19 for the opening, while during the fastened condition the closed side 6 is arranged at the supporting surface and remains in position thanks to the action of the closing member 20.

By way of example, there may be three closing members 20 and three or four rotatable members 19 for each module 2.

Furthermore, in figures 6 and 7 it is possible to see that the supporting means 9 comprises at least one elastically deformable element 21 for keeping the closed side 6 taut with respect to the fixing surface during the fastened condition so as to maintain the lever of the closing member 20 taut with respect to the portion arranged on the supporting base. Preferably, such elastically deformable element 21 is arranged within the channel 1 and pushes against a folded flap of the closed side 6 during the fastened condition.

Furthermore, the channel 1 comprises connecting means 14 operatively interposed between one channelling module 2 and the other to connect them along the main direction of extension 3.

According to the present invention, the connecting means 14 of at least one channelling module 2 interposed between two respective channelling modules 2 comprises an edge 15 of the first passage section 4 of the closed side 6 and an edge 15 of the second passage section 5 of the closed side 6, at least partly superposed with the respective edges 15 of the closed sides of the adjacent channelling modules 2 (previous and subsequent) in such a way that, by bringing the relative supporting means 9 into the released condition, the channelling module 2 is removed relative to the adjacent channelling modules 2 according to a disassembly direction that is orthogonal to the main direction of extension 3 in order to inspect the inside of the channel 1. Such superposition is performed according to a direction moving away from the supporting surface in such a way that the edge 15 superposed with the other is visible from the outside of the channel 1 (the edge 15 below is instead only visible from the inside of the channel 1).

In any case, both the edges 15 of the ends of at least one module interposed between the two are superposed respectively with the edge 15 of the previous module and the edge 15 of the subsequent module according to the main direction of extension 3.

Preferably, each edge 15 of the passage sections is completely or almost completely superposed with the edge 15 of the closed side 6 of the adjacent module along the whole or almost all the surface of the closed side 6.

In the preferred embodiment, the connection means 14 comprises male type edges 15 (edge 15 internally superposed) and female type edges 15 (edge 15 externally superposed), in use, inserted inside one another to define the aforementioned connection. The channelling module 2 interposed between the two respective channelling modules 2 comprises both edges 15 of the female type passage sections.

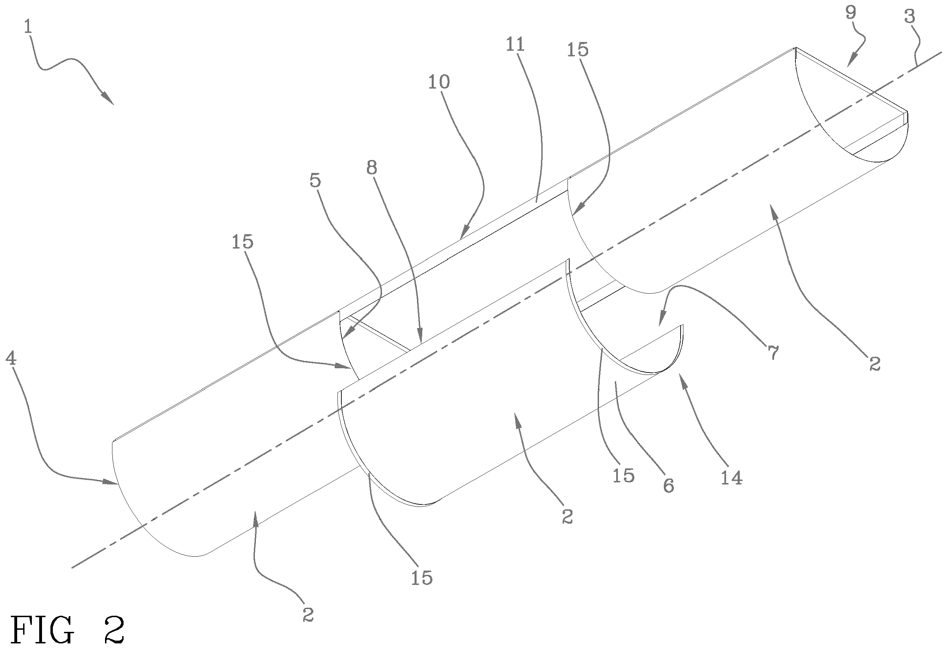

In this way, it is advantageously possible to remove or rotate the module according to a direction moving away from the supporting surface (or from the supporting base 10) without having to disassemble the adjacent modules. By doing so, an access point is created (at the removed module) which allows the inside of the channel 1 to be inspected at that point or the other adjacent modules to be removed as far as the area that is to be inspected (figures 2 and 3).

It is also to be noted that a channel 1 comprises alternatively a module with both edges 15 externally superposed and a module with both edges 15 located internally along the whole of its length or only along part of it. In this way, there is the possibility to access the inside of the channel 1 every two modules.

In general, a channel 1 may comprise a module with both edges 15 externally superposing each other or various modules with both edges 15 located internally or with at least one edge 15 located internally (module with male-male or male-female end).

Furthermore, the channel 1 comprises suspension means 16 connected between a channelling module 2 and the supporting surface for supporting the channelling module 2 during the released condition. Such suspension means 16 is configured to support the channelling module 2 in a position spaced from the supporting surface.

Preferably, the suspension means 16 is connected between the channelling module 2 and the supporting base 10 for supporting the channelling module 2 during the released condition. In fact, when the module is released it would tend to fall to the ground. The suspension means 16 is configured to support the channelling module 2 in a position spaced from the supporting base 10. In the appended figures 4 and 5, the suspension means 16 is arranged within the channel 1 (in the internal air passage volume) so that it is not externally visible.

Preferably, the suspension means 16 comprises a flexible member (preferably a rope 17) or a member with rigid arms having a length greater than the distance between the channelling module 2 and the supporting surface or the supporting base 10 at the same point where such member is connected during the fastened condition. In this way, during the suspended condition, an access opening is created between the module and the supporting surface or the supporting base 10.

Preferably, there are two members (figures 4 and 5) between the supporting base 10 and two opposite portions of the module with respect to the main direction of extension 3 so as to keep the module in shape during the released position (otherwise it could get deformed). As can be seen in figures 4 and 5, there are at least two ropes 17 extending from the supporting base towards the longitudinal ends 8 of the module. The ends of the ropes 17 are connected to the supporting base 10 and to the module through specific screws 18 with an eyelet (the rope 17 is fixed into the eyelet while the screw is connected to the channel 1).

During the fastened configuration the ropes 17 remain in the relaxed position within the channel 1, while during the released configuration the ropes 17 become taut.

In the embodiment illustrated in figures 6 and 7, the suspension means 16 is only present at the longitudinal end 8 opposite the rotatable member 19 so as to keep the module 2 open (opening between the base and the closed side 6) without the latter rotating completely about the rotatable member 19 until reaching a substantially vertical orientation. In other words, the suspension means 16 has a length such as to keep the module 2 semi-open.

Finally, it is to be noted that the material of which the modules and supporting bases are made is preferably metal.

The subject matter of the present invention is also a method for inspecting the channel 1 for transporting air previously described and fully claimed below.

In particular, the method comprises the following operating steps:
- identifying, along the channel 1, the channelling module 2 having both edges 15 externally superposed on the adjacent channelling modules 2 and closest to the area to be inspected;
- configuring the supporting means 9 of the channelling module 2 identified from the fastened position to the released position;
- removing first the channelling module 2 identified relative to the adjacent channelling modules 2 by moving it along a disassembly direction which is orthogonal to the main direction of extension 3.

Additionally, the method also comprises a step subsequent to those described above of removing in sequence the channelling module(s) 2 adjacent to the module removed first until reaching the area to be inspected.

The present invention reaches the set objects.

In particular, the present invention allows the channel inspection operations to be simplified since it is no longer necessary to start from a start and end area of the channel, but it is possible to individually disconnect some modules independently from the others. In fact, the presence of modules along the channel with both edges of the "female" type and the presence of supporting means that can be configured between a fastened and a released condition allows a module to be disassembled even in a central position of the channel in order to reach the area to be inspected more quickly. Furthermore, once the first module has been disassembled, the space is automatically created for disassembling the other adjacent modules in cascade until reaching the area to be inspected (if such area is not exactly at the module to be disassembled).

Furthermore, the present invention allows the safety of the disassembly operations of the modules of a channel to be improved since the supporting ropes keep the module released in suspension without having to support their weight or without having to transport it to the ground.

Also worthy of note is that the present invention is relatively easy to realise and also that the cost connected to the actuation of the invention is not very high.

## Claims

1. A channel (1) for transporting air which can be connected to a supporting surface, comprising:
a plurality of channelling modules (2) sequentially connected along a main direction of extension (3) of the channel (1); each channelling module (2) extending along the main direction of extension (3) between a first section (4) of it for the flow of air and a second section (5) of it for the flow of air opposite one another and alternatively shaped as a male joint and a female joint so that by creating a row of modules (2) they are fitted inside one another wherein the male joint inside the female joint of the consecutive module; each module (2) laterally having a closed side (6) and an open side (7); said open side (7) facing, in use, the supporting surface so that the air transport is achieved between the closed side (6) and the supporting surface;
connecting means (14) operatively interposed between one channelling module (2) and the other to connect them along the main direction of extension (3);
supporting means (9) operatively interposable between one channelling module (2) and the supporting surface to connect the channelling module (2) to the supporting surface; said supporting means (9) being configurable between a fastened condition wherein the module (2) is connected to the supporting surface and a released condition wherein the module (2) is disconnected from the supporting surface;
**characterised in that** the connecting means (14) of at least one channelling module (2) interposed between two respective channelling modules (2) comprises an edge (15) of the first passage section (4) of the closed side (6) and an edge (15) of the second passage section (5) of the closed side (6); said edges of the first passage section (4) and of the second passage section (5) being realised in a single piece with the channelling module (2) so as to define a male edge (15) or a female edge (15) for defining said male joint or said female joint; at least one channelling module (2) having both edges (15) of the first section (4) and of the second section (5) of the female type the respective edges (15) at least partly superposed with the respective edges (15) of the male type of the closed sides of the adjacent channelling modules (2) according a direction moving away from the supporting surface in such a way that by bringing the relative supporting means (9) into the released condition, the channelling module (2) is removed relative to the adjacent channelling modules (2) according to a disassembly direction which is transversal to the main direction of extension (3) in order to inspect the inside of the channel (1);
the channel (1) comprising suspension means (16) connectable between a channelling module (2) and the supporting surface for supporting the channelling module (2) during the released condition.

2. The channel (1) according to claim 1, **characterised in that** each edge (15) of the passage sections completely superposes the edge (15) of the closed side (6) of the adjacent module.

3. The channel (1) according to any one of the preceding claims, **characterised in that** the connecting means (14) comprises edges (15) of male type and edges (15) of female type, which in use are inserted into each other to define said connection; said at least one channelling module (2) interposed between the two respective channelling modules (2) comprising both edges (15) of the passage sections of female type.

4. The channel (1) according to any one of the preceding claims, **characterised in that** the closed side (6) of each channelling module (2) has a semi-circular shape according to a section plane which is orthogonal to the main direction of extension (3).

5. The channel (1) according to any one of the preceding claims, **characterised in that** the supporting means (9) comprises a supporting base (10), which in use is connectable to the supporting surface and extends along the main direction of extension (3); said closed side (6) of the channelling module (2) being connected to said supporting base (10).

6. The channel (1) according to claim 5, **characterised in that** the closed side (6) of the channelling module (2) has longitudinal ends (8) extending along the main direction of extension (3) at which longitudinal ends it is connected to the opposite side (11) edges (15), which are connected to longitudinal ends (8) of the closed side (6) of the channelling module (2).

7. The channel (1) according to any one of the preceding claims, **characterised in that** the supporting means (9) comprises at least one member for each module to be disassembled, which can be activated independently from the other modules and is partly accessible from the outside of the channel (1) to form the fastened configuration and the released configuration.

8. The channel (1) according to any one of the preceding claims, **characterised in that** the supporting means (9) comprises at least one rotatable member (19) connected between a longitudinal end (8) of the closed side (6) and the supporting surface, and a closing member (20) positioned on the longitudinal end (8) of the closed side (6) opposite the first and the supporting surface in such a way that during the released condition, the closed side (6) rotates around the rotatable member (19), while during the fastened condition, the closed side (6) is positionable at the supporting surface and remains in position thanks to the closing member (20).

9. The channel (1) according to any one of the preceding claims, **characterised in that** said suspension means (16) are configured to support the channelling module (2) in a position spaced from the supporting surface.

10. The channel (1) according to any of claims 5 to 8, **characterised in that** the suspension means (16) are connected between the channelling module (2) and the supporting base (10) to support the channelling module (2) during the released condition; the suspension means (16) being configured to support the channelling module (2) in a position spaced from the supporting base (10).

11. The channel (1) according to claim 9 or 10, **characterised in that** the suspension means (16) comprises a rope (17), having a length that is greater than the distance between the channelling module (2) and the supporting surface or the supporting base (10) at the same point where the rope (17) is connected during the fastened condition.

12. A method for inspecting a channel (1) for transporting air according to any one of the preceding claims, **characterised in that** it comprises the following operating steps:
- identifying the channelling module (2) having both edges (15) externally superposed on the adjacent channelling modules (2) and closest to the area to be inspected;
- configuring the supporting means (9) of the channelling module (2) identified, from the fastened position to the released position;
- removing first the channelling module (2) identified relative to the adjacent channelling modules (2) by moving it along a disassembly direction which is transversal to the main direction of extension (3).

13. The method according to claim 12, **characterised in that** it comprises a step of removing, in sequence, the channelling module(s) (2) adjacent to the module first removed up to reaching the area to be inspected.

## Patentansprüche

1. Kanal (1) für den Lufttransport, der mit einer Halterungsoberfläche verbunden werden kann, umfassend:
eine Vielzahl von Kanalmodulen (2), die fortlaufend entlang einer Hauptausdehnungsrichtung (3) des Kanals (1) angeschlossen sind, wobei sich ein jedes Kanalmodul (2) entlang der Hauptausdehnungsrichtung (3) zwischen einem ersten Abschnitt (4) davon für den Luftstrom und einem zweiten Abschnitt (5) davon für den Luftstrom erstreckt, gegenständig zueinander angeordnet und wechselseitig ausgebildet als eine Federverbindung und eine Nutverbindung, sodass durch das Schaffen einer Reihe von Modulen (2), diese ineinander eingepasst werden, wobei die Federverbindung in die Nutverbindung des nächsten Moduls eingefügt wird, wobei ein jedes Modul (2) seitlich eine geschlossene Seite (6) und eine offene Seite (7) aufweist, wobei die offene Seite (7) in Verwendung der Halterungsoberfläche zugewandt ist, sodass der Lufttransport zwischen der geschlossenen Seite (6) und der Halterungsoberfläche erzielt wird; Verbindungsmittel (14), die betriebswirksam zwischen den einzelnen Kanalmodulen (2) eingesetzt sind, um diese entlang der Hauptausdehnungsrichtung (3) zu verbinden;
Halterungsmittel (9), die betriebswirksam zwischen einem Kanalmodul (2) und der Halterungsoberfläche eingesetzt werden können, um das Kanalmodul (2) mit der Halterungsoberfläche zu verbinden, wobei die Halterungsmittel (9) zwischen einem befestigten Zustand, in dem das Modul (2) mit der Halterungsoberfläche verbunden ist, und einem gelösten Zustand, in dem das Modul (2) von der Halterungsoberfläche getrennt ist, konfigurierbar sind, **dadurch gekennzeichnet, dass** die Verbindungsmittel (14) von mindestens einem Kanalmodul (2), die zwischen zwei jeweiligen Kanalmodulen (2) eingesetzt sind, eine Kante (15) des ersten Durchgangsabschnitts (4) der geschlossenen Seite (6) und eine Kante (15) des zweiten Durchgangsabschnitts (5) der geschlossenen Seite (6) umfassen, wobei die Kanten des ersten Durchgangsabschnitts (4) und des zweiten Durchgangsabschnitts (5) in einem einzigen Stück mit dem Kanalmodul (2) ausgebildet sind, sodass eine Federkante (15) oder eine Nutkante (15) definiert wird, um die Federverbindung oder die Nutverbindung zu definieren, wobei mindestens ein Kanalmodul (2) beide Kanten (15) des ersten Abschnitts (4) und des zweiten Abschnitts (5) des Nuttyps der jeweiligen Kanten (15) zumindest teilweise übereinander gelagert mit den jeweiligen Kanten (15) des Federtyps der geschlossenen Seiten der angrenzenden Kanalmodule (2) nach einer Richtung aufweist, wegführend von der Halterungsoberfläche, sodass das Kanalmodul (2) relativ zu den angrenzenden Kanalmodulen (2) nach einer Demontagerichtung, die quer zur Hauptausdehnungsrichtung (3) verläuft, entfernt wird, um die Innenseite des Kanals (1) zu inspizieren, indem die entsprechenden Halterungsmittel (9) in den gelösten Zustand gebracht werden,
wobei der Kanal (1) Aufhängungsmittel (16) umfasst, die zwischen einem Kanalmodul (2) und der Halterungsoberfläche angeschlossen werden können, um das Kanalmodul (2) während des gelösten Zustands zu tragen.

2. Kanal (1) nach Anspruch 1, **dadurch gekennzeichnet, dass** eine jede Kante (15) der Durchgangsabschnitte die Kante (15) der geschlossenen Seite (6) des angrenzenden Moduls komplett überlagert.

3. Kanal (1) nach einem der vorhergehenden Ansprüche, **dadurch gekennzeichnet, dass** die Verbindungsmittel (14) Kanten (15) vom Federtyp und Kanten (15) vom Nuttyp umfassen, die in Verwendung ineinander eingefügt werden, um die Verbindung zu definieren, wobei mindestens ein Kanalmodul (2), das zwischen den zwei jeweiligen Kanalmodulen (2) eingesetzt ist, beide Kanten (15) der Durchgangsabschnitte vom Nuttyp umfasst.

4. Kanal (1) nach einem der vorhergehenden Ansprüche, **dadurch gekennzeichnet, dass** die geschlossene Seite (6) eines jeden Kanalmoduls (2) eine Halbkreisform nach einer Querschnittsebene umfasst, die rechtwinkelig zur Hauptausdehnungsrichtung (3) angeordnet ist.

5. Kanal (1) nach einem der vorhergehenden Ansprüche, **dadurch gekennzeichnet, dass** die Halterungsmittel (9) eine Halterungsbasis (10) umfassen, die in Verwendung mit der Halterungsoberfläche verbunden werden kann und sich entlang der Hauptausdehnungsachse (3) erstreckt, wobei die geschlossene Seite (6) des Kanalmoduls (2) mit der Halterungsbasis (10) verbunden ist.

6. Kanal (1) nach Anspruch 5, **dadurch gekennzeichnet, dass** die geschlossene Seite (6) des Kanalmoduls (2) Längsenden (8) aufweist, die sich entlang der Hauptausdehnungsrichtung (3) erstrecken, und an diesen Längsenden mit den seitlichen (11) gegenständigen Kanten (15) angeschlossen ist, die mit den Längsenden (8) der geschlossenen Seite (6) des Kanalmoduls (2) verbunden sind.

7. Kanal (1) nach einem der vorhergehenden Ansprüche, **dadurch gekennzeichnet, dass** die Halterungsmittel (9) mindestens ein Element für jedes zu demontierende Modul umfassen, das unabhängig von den anderen Modulen aktiviert werden kann und teilweise von der Außenseite des Kanals (1) zugänglich ist, um die befestigte Konfiguration und die gelöste Konfiguration zu formen.

8. Kanal (1) nach einem der vorhergehenden Ansprüche, **dadurch gekennzeichnet, dass** die Halterungsmittel (9) mindestens ein drehbares Element (19) umfassen, das zwischen einem Längsende (8) der geschlossenen Seite (6) und der Halterungsoberfläche angeschlossen ist, und ein Verschlusselement (20), das am Längsende (8) der geschlossenen Seite (6) gegenständig zu Ersterem und der Halterungsoberfläche positioniert ist, sodass sich die geschlossene Seite (6) während des gelösten Zustands um das drehbare Element (19) dreht, während die geschlossene Seite (6) während des befestigten Zustands an der Halterungsoberfläche positioniert werden kann und dank des Verschlusselements (20) in Position bleibt.

9. Kanal (1) nach einem der vorhergehenden Ansprüche, **dadurch gekennzeichnet, dass** die Aufhängungsmittel (16) ausgelegt sind, um das Kanalmodul (2) in einer von der Halterungsoberfläche beabstandeten Position zu tragen.

10. Kanal (1) nach einem der Ansprüche 5 bis 8, **dadurch gekennzeichnet, dass** die Aufhängungsmittel (16) zwischen dem Kanalmodul (2) und der Halterungsbasis (10) angeschlossen sind, um das Kanalmodul (2) während des gelösten Zustands zu tragen, wobei die Aufhängungsmittel (16) ausgelegt sind, um das Kanalmodul (2) in einer von der Halterungsbasis (10) beabstandeten Position zu tragen.

11. Kanal (1) nach Anspruch 9 oder 10, **dadurch gekennzeichnet, dass** die Aufhängungsmittel (16) ein Seil (17) umfassen, aufweisend eine Länge, die größer ist als der Abstand zwischen dem Kanalmodul (2) und der Halterungsoberfläche oder der Halterungsbasis (10) an derselben Stelle, an der das Seil (17) während des befestigten Zustands angeschlossen ist.

12. Verfahren zum Inspizieren eines Kanals (1) für den Lufttransport nach einem der vorhergehenden Ansprüche, **dadurch gekennzeichnet, dass** es die folgenden Betriebsschritte umfasst:
- Identifizieren des Kanalmoduls (2), aufweisend beide Kanten (15) außenseitig über den angrenzenden Kanalmodulen (2) gelagert und in unmittelbarer Nähe zum zu inspizierenden Bereich;
- Konfigurieren der Halterungsmittel (9) des identifizierten Kanalmoduls (2) von der befestigten Position in die gelöste Position;
- Entfernen zuerst des identifizierten Kanalmoduls (2) relativ zu den angrenzenden Modulen (2) durch dessen Bewegen entlang einer Demontagerichtung, die quer zur Hauptausdehnungsrichtung (3) verläuft.

13. Verfahren nach Anspruch 12, **dadurch gekennzeichnet, dass** es einen Schritt umfasst, um das/die Kanalmodul(e) (2) zu entfernen, angrenzend an das zuerst entfernte Modul, um den zu inspizierenden Bereich zu erreichen.

## Revendications

1. Canal (1) servant à transporter de l'air pouvant être raccordé à une surface de support, comprenant :
une pluralité de modules de canalisation (2) raccordés en séquence le long d'une direction principale d'extension (3) du canal (1) ; chaque module de canalisation (2) se prolongeant le long de la direction principale d'extension (3) entre une première section (4) de celui-ci pour le flux d'air et une seconde section (5) de celui-ci pour le flux d'air opposée l'une à l'autre et façonnées alternativement comme un joint mâle et un joint femelle de sorte qu'en créant une rangée de modules (2), ils puissent être montés à l'intérieur des uns et des autres dans lequel le joint mâle se trouve à l'intérieur du joint femelle du module consécutif ; chaque module (2) comportant latéralement un côté fermé (6) et un côté ouvert (7) ; ledit côté ouvert (7) faisant face, en fonctionnement, à la surface de support de sorte que le transport de l'air soit accompli entre le côté fermé (6) et la surface de support ;
des moyens de raccordement (14) fonctionnellement interposés entre un module de canalisation (2) et l'autre pour les raccorder le long de la direction principale d'extension (3) ;
des moyens de support (9) pouvant s'interposer fonctionnellement entre un module de canalisation (2) et la surface de support pour raccorder le module de canalisation (2) à la surface de support ; lesdits moyens de support (9) pouvant être configurés entre une condition d'accrochage dans laquelle le module (2) est raccordé à la surface de support et une condition de décrochage dans laquelle le module (2) est décroché de la surface de support ;
**caractérisé en ce que** les moyens de raccordement (14), d'au moins un module de canalisation (2) interposé entre deux modules de canalisation (2) respectifs, comprennent un bord (15) de la première section de passage (4) du côté fermé (6) et un bord (15) de la seconde section de passage (5) du côté fermé (6) ;
lesdits bords de la première section de passage (4) et de la seconde section de passage (5) étant réalisés en un seul tenant avec le module de canalisation (2) de sorte à définir un bord mâle (15) ou un bord femelle (15) pour définir ledit joint mâle ou ledit joint femelle ; au moins un module de canalisation (2) comportant les deux bords (15) de la première section (4) et de la seconde section (5) du type femelle des bords (15) respectifs au moins en partie superposés sur les bords (15) respectifs du type mâle des côtés fermés des modules de canalisation (2) adjacents selon une direction s'éloignant de la surface de support de sorte qu'en amenant les moyens de support (9) relatifs dans la condition de décrochage, le module de canalisation (2) est retiré par rapport aux modules de canalisation (2) adjacents selon une direction de désassemblage étant transversale à la direction principale d'extension (3) afin d'inspecter l'intérieur du canal (1) ;
le canal (1) comprenant des moyens de suspension (16) pouvant être raccordés entre un module de canalisation (2) et la surface de support pour supporter le module de canalisation (2) pendant la condition de décrochage.

2. Canal (1) selon la revendication 1, **caractérisé en ce que** chaque bord (15) des sections de passage se superpose complètement au bord (15) du côté fermé (6) du module adjacent.

3. Canal (1) selon l'une quelconque des revendications précédentes, **caractérisé en ce que** les moyens de raccordement (14) comprennent des bords (15) de type mâle et des bords (15) de type femelle qui, en fonctionnement, sont introduits les uns dans les autres pour définir ledit raccordement ; ledit au moins un module de canalisation (2) interposé entre deux modules de canalisation (2) respectifs comprenant les deux bords (15) des sections de passage de type femelle.

4. Canal (1) selon l'une quelconque des revendications précédentes, **caractérisé en ce que** le côté fermé (6) de chaque module de canalisation (2) a une forme semi-circulaire selon un plan de section étant orthogonal à la direction principale d'extension (3).

5. Canal (1) selon l'une quelconque des revendications précédentes, **caractérisé en ce que** les moyens de support (9) comprennent une base de support (10) qui, en fonctionnement, peut se raccorder à la surface de support et se prolonge le long de la direction principale d'extension (3) ; ledit côté fermé (6) du module de canalisation (2) étant raccordé à ladite base de support (10).

6. Canal (1) selon la revendication 5, **caractérisé en ce que** le côté fermé (6) du module de canalisation (2) comporte des extrémités longitudinales (8) se prolongeant le long de la direction principale d'extension (3), en correspondance desquelles il est raccordé aux bords (15) latérales (11) opposés étant raccordés aux extrémités longitudinales (8) du côté fermé (6) du module de canalisation (2).

7. Canal (1) selon l'une quelconque des revendications précédentes, **caractérisé en ce que** les moyens de support (9) comprennent au moins un organe pour chaque module à désassembler pouvant être activé indépendamment des autres modules et étant en partie accessible de l'extérieur du canal (1) pour former la configuration d'accrochage et la configuration de décrochage.

8. Canal (1) selon l'une quelconque des revendications précédentes, **caractérisé en ce que** les moyens de support (9) comprennent au moins un organe rotatif (19) raccordé entre une extrémité longitudinale (8) du côté fermé (6) et la surface de support, et un organe de fermeture (20) positionné sur l'extrémité longitudinale (8) du côté fermé (6) opposée à la première et la surface de support de sorte que pendant la condition de décrochage, le côté fermé (6) tourne autour de l'organe rotatif (19), tandis que pendant la condition d'accrochage, le côté fermé (6) peut être positionné en correspondance de la surface de support et reste en position grâce à l'organe de fermeture (20).

9. Canal (1) selon l'une quelconque des revendications précédentes, **caractérisé en ce que** lesdits moyens de suspension (16) sont configurés pour supporter le module de canalisation (2) dans une position espacée de la surface de support.

10. Canal (1) selon l'une quelconque des revendications de 5 à 8, **caractérisé en ce que** les moyens de suspension (16) sont raccordés entre le module de canalisation (2) et la base de support (10) pour supporter le module de canalisation (2) pendant la condition de décrochage ; les moyens de suspension (16) étant configurés pour supporter le module de canalisation (2) dans une position espacée de la base de support (10).

11. Canal (1) selon la revendication 9 ou 10, **caractérisé en ce que** les moyens de suspension (16) comprennent une corde (17) ayant une longueur étant supérieure à la distance entre le module de canalisation (2) et la surface de support ou la base de support (10) en correspondance du même point auquel la corde (17) est reliée pendant la condition d'accrochage.

12. Procédé d'inspection d'un canal (1) servant à transporter de l'air selon l'une quelconque des revendications précédentes, **caractérisé en ce qu'**il comprend les étapes fonctionnelles suivantes :
- identifier le module de canalisation (2) comportant deux bords (15) extérieurement superposés sur les modules de canalisation (2) adjacents et les plus proches de la zone à inspecter ;
- configurer les moyens de support (9) du module de canalisation (2) identifié de la position d'accrochage à la position de décrochage ;
- retirer le premier module de canalisation (2) identifié par rapport aux modules de canalisation (2) adjacents en le déplaçant le long d'une direction de désassemblage étant transversale à la direction principale d'extension (3).

13. Procédé selon la revendication 12, **caractérisé en ce qu'**il comprend une étape consistant à retirer, en séquence, le(s) module(s) de canalisation (2) adjacent(s) au module retiré en premier pour atteindre la zone à inspecter.
